# EUROPEAN PATENT APPLICATION

(11) **EP 0 858 235 A1**
(43) Date of publication of application: **12.08.1998**
(21) Application number: 97400265.1
(22) Date of filing: 06.02.1997
(51) Int. Cl.: H04Q 7/30

(54) **Personal communications network for flexible traffic demand**

(71) Applicant: ALCATEL ALSTHOM COMPAGNIE GENERALE D'ELECTRICITE, 75008 Paris (FR)
(72) Inventor: Sanjuán, Flores Tomás, 28029 Madrid (ES)
(74) Representative: Pohl, Herbert, Dipl.-Ing.

(57) **Abstract**

Consisting of a set of base stations (BS) that provide coverage, via radio, for cordless terminals situated in a determined area, in such a way that said base stations (BS) are connected to a certain number of base station controllers (BSC) which serve to manage the radio channels available for this network.

The physical connections between the base stations (BS) and the base station controllers (BSC) are established dynamically by means of a link allocation device (LAD), as a function of the traffic load on each base station (BS) and on the degree of occupancy of each base station controller (BSC). This permits the network resources to be dimensioned as a function of the total traffic demand instead of the traffic demands by areas, the sum of which, being much greater than the total demand, implies the underemployment of the resources for the greater part of the time.

## Description

### OBJECT OF THE INVENTION

This invention concerns cordless personal communications networks, used in the access network to the switched telephone network to provide radio coverage in the subscriber loop in determined areas where the traffic demand varies significantly in the course of the day or on certain days of the week, and where the total maximum traffic demand of the subscriber group remains approximately constant.

The object of the invention is to optimise the employment of the resources constituting the infrastructure of the cordless communications networks used, through the sharing of the resources and without this resulting in an impairment in the facilities or in the grade of service in the area of coverage.

It is particularly applicable in personal communications networks formed by digital cordless networks of DECT type, employed mainly in the subscriber loop to provide telephone access in determined areas, for example residential areas and business areas, where the demand for telephone service broadly shifts from one to the other in accordance with office hours.

### BACKGROUND OF THE INVENTION

The employment of cordless communications networks in the subscriber loop has lately become very popular among telephone service operators due mainly to the low cost of the required infrastructure for this type of networks, especially in locations where the subscribers are widely separated.

In addition, the short period of time needed to install them and their low maintenance costs (when compared to cable access networks) are also factors to be taken into account when assessing this type of networks.

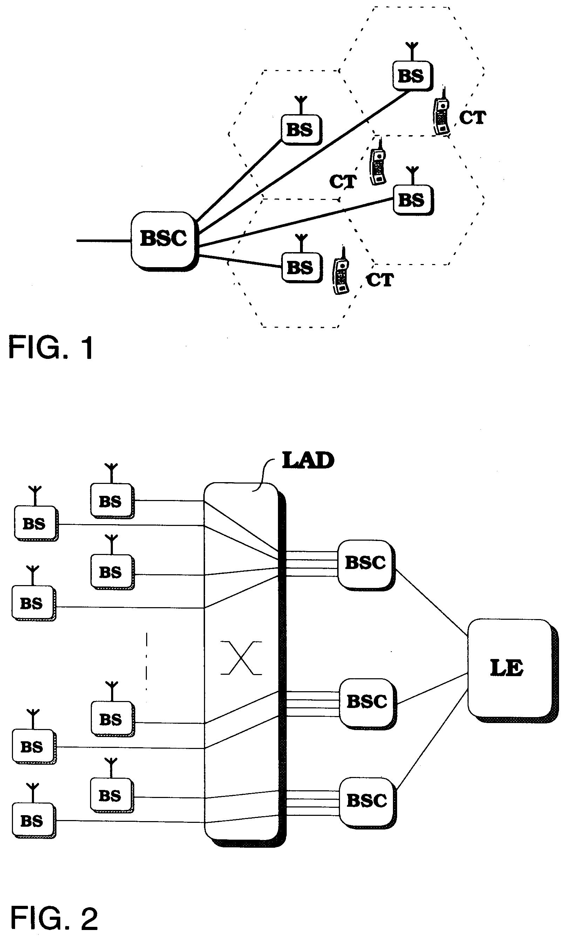

In the article "Application of DECT-based systems as access network for outdoor residential areas" by C. Mayoral et al., Proceedings of ISS'95, Berlin, April 23 to 28, 1995, volume 1, pages 362 to 366, figure 2 shows the configuration of an access network to the public telephone network via DECT-type cordless networks.

In these networks, the cordless terminals that form part of them communicate via radio with the corresponding base station within a determined cell, and from here with the base station controller to which the base station in question is connected.

This is a hard-wired connection such that, for the coverage controlled by each base station controller and depending on the subscriber density, on the busy hour traffic demand and on the traffic capacity to be handled by each base station controller, the result has to be the minimum grade of service offered by the network operators.

It can arise that the service demand in certain areas varies greatly depending on the time and/or day of the week. This means that an overdimensioning of the infrastructure is needed to achieve the grade of service required in the busy hour since, during a great part of the time, the demand is much less.

Thus, for example, in business areas, the traffic demand is very high during working hours, but almost non-existent during the rest of the day and at weekends. The inverse occurs in residential areas where traffic demand is low during working hours and higher in the rest of the day and at weekends.

In any case, dimensioning of the infrastructure of the networks must always be done according to the maximum demand of each zone covered, which means a high investment in equipment and an extended payback period because of the low mean occupancy.

### CHARACTERISATION OF THE INVENTION

The communications network according to the invention is formed by a set of base stations that provide radio coverage for a group of cordless terminals which are to be found located in a determined area, such that these base stations are connected to a certain number of base station controllers which serve to manage the radio channels available in the spectrum allocated to the network in question.

The actual connections between the base stations and the base station controllers are made dynamically by means of a link allocation device, as a function of the traffic load in the zone covered by each base station and of the level of occupancy of each base station controller.

In this way, when the traffic density is very high in a determined area within the zone of coverage of the communications network, a base station controller will have to manage the communications channels of a reduced number of base stations, on the other hand, when the traffic density is low, this controller will assume management of a greater number of base stations.

### BRIEF FOOTNOTES TO THE FIGURE

A fuller explanation of the invention can be obtained from the description given below of a preferred implementation based on the figures attached, in which:
- figure 1 shows the configuration of a basic DECT - type cordless communications system,
- figure 2 shows the full configuration of a cordless communications system to provide coverage over a wide area by means of basic systems like those of the previous figure, and
- figure 3 shows a multiplexing element employed in the development of the invention.

### DESCRIPTION OF AN IMPLEMENTATION OF THE INVENTION

A basic cordless DECT type communications system is shown in figure 1 in which a determined number of base stations BS (four in this case) provide radio coverage for the cordless terminals CT located within their respective areas of influence.

These base stations BS are each connected through an interface to a base station controller BSC that mainly serves to manage the communications channels and the radio interface control channels. The maximum number of communications channels that can be managed by a base station controller BSC is limited only by the actual frame structure of the DECT system.

In this case the maximum theoretical limit is twelve channels, which correspond to the twelve time slots in a DECT frame (in practice all of the channels cannot been employed simultaneously).

Any cordless terminal CT with which a call is established will use one of the twelve time slots of the frame at one of the ten possible bearer frequencies defined in the standard. This will be done via one of the four base stations BS, depending on which of them is "listened" best by the terminal.

Thus it can be seen that the maximum traffic that this communications system is capable of handling is limited by the actual structure of the frame and, if a greater traffic capacity is required, it would be necessary to have a greater number of base station controllers BSC for the same number of base stations BS.

In a standard system, the connections between these base station controllers BSC and the base stations BS are hard-wired, that is, they are set up through permanent links. Consequently each basic system has to be dimensioned according to the grade of service desired during the busy hour, which implies the available resources are underused.

Figure 2 shows, in a simplified form, the essence of this invention, in which it can be seen that the base stations BS are not connected to the base station controllers BSC directly, but through a link allocation device LAD that, in a dynamic manner and depending on the loading of the base station controllers BSC, establishes the connections between the latter and the base stations BS themselves. On the other side, these base station controllers BSC are connected to a local exchange LE of the public switched telephone network.

Thus, for example, in a zone where there is a residential area and a business area, it may be that during office hours the traffic requirement of the residential subscribers is very low and that of the business area is very high, while outside business hours just the opposite is the case.

Under these circumstances the link allocation device LAD would, for example, connect a base station controller BSC with the maximum number of base stations BS that it is capable of handling (four in this case) for the residential area, while for the business area where the traffic density is much higher, it would only connect two base stations BS to one base station controller BSC. In this way the number of base station controllers BSC dedicated to manage the traffic demand in the business area would be much greater than that dedicated to traffic management in the residential areas.

This permits the network resources to be dimensioned according to the busy hour traffic demand of the whole area covered, and not according to partial area requirements as is being done at present. Major savings can be obtained in this way, possibly as much as 50 %.

To achieve this, the link allocation device LAD has tables or data bases that are being continuously updated and in which are reflected the occupation status of all of the base station controllers BSC.

These tables indicate which channels of the DECT frame managed by each base station controller BSC are occupied and through which base station BS the radio link is being formed with the cordless terminal CT involved. In this way, and according to established occupancy patterns, the link allocation device LAD forms the connections between base stations BS and base station controllers BSC so as to assure a blocking probability less than a level selected in the design process.

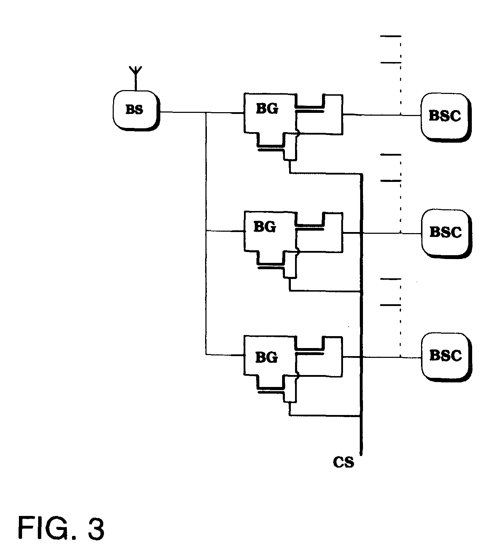

As the traffic level varies among the different zones, the link allocation device LAD reconfigures the connection, for which purpose it includes multiplexing elements as shown in figure 3 in which each base station BS has the possibility of being connected to a set of base station controllers BSC through bidirectional gates BG which are controlled by control signals produced by the control logic of the link allocation device LAD itself, whereby only one of these bidirectional gates BG is closed and permits signals to pass in both transmission directions while the rest remain open and consequently do not allow signals to pass through.

Since the connections between the base stations BS and the base station controller BSC assigned by the link allocation device LAD are completely flexible, this means that if at a given moment a base station controller BSC is close to saturation while another has a much lower occupancy, one of the base stations BS that is connected to the first base station controller can be reconnected to the second, this having to occur without any interruption in communications already established.

To achieve this, the base station that has to be transferred to another base station controller is inhibited from setting up new calls, such that when those already present are considered by this base station to be over, the link allocation device LAD forms a new link between this base station and the new base station controller, and clears down the previously existing link.

## Claims

1. **COMMUNICATIONS NETWORK** comprising a set of base stations (BS) to provide coverage, via radio, for cordless terminals (CT) in a determined area, in which these base stations (BS) are connected to a lower number of base station controllers (BSC) that manage the available radio channels in said network, **characterised** in that the connections between the base stations (BS) and the base station controllers (BSC) are formed dynamically by means of a link allocation device (LAD) as a function of the traffic load of each base station controller (BSC).

2. **COMMUNICATIONS NETWORK** according to claim 1, **characterised** in that the link allocation device (LAD) includes channel occupancy tables that indicate for each base station controller (BSC) which channels are occupied and via which base station (BS) the communication with the cordless terminals (CT) is being made.

3. **COMMUNICATIONS NETWORK** according to claim 2, **characterised** in that when a first base station controller (BSC) reaches a determined number of occupied channels and there is a second base station controller (BSC) with a lower number of occupied channels, the link allocation device (LAD) establishes a new link between one of the base stations (BS) managed by the first base station controller (BSC) and the second base station controller (BSC), clearing the link existing between this base station (BS) and the first base station controller (BSC).

4. **LINK ALLOCATION DEVICE** (LAD) for connection between a set of base stations (BS) and a set of base station controllers (BSC) in a cordless communications network **characterised** in that it establishes connections between each base station controller (BSC) and a variable number of base stations (BS) depending on the traffic load of each base station controller (BSC).
